# EUROPÄISCHE PATENTSCHRIFT

(11) **EP 1 636 097 B1**
(45) Veröffentlichungstag und Bekanntmachung des Hinweises auf die Patenterteilung: **15.11.2006**
(21) Anmeldenummer: 04785810.5
(22) Anmeldetag: 24.06.2004
(51) Int. Cl.: B65B 43/52, B65G 17/00

(54) **VORRICHTUNG UND VERFAHREN ZUM BEARBEITEN VON KONTINUIERLICH AUF TRÄGERELEMENTEN BEREITGESTELLTEN PACKUNGEN**
DEVICE AND METHOD FOR PROCESSING PACKAGES WHICH ARE CONTINUOUSLY PREPARED ON CARRIER ELEMENTS
DISPOSITIF ET PROCEDE DE TRAITEMENT D'EMBALLAGES APPROVISIONNES EN CONTINU SUR DES ELEMENTS SUPPORTS

(30) Priorität: 24.06.2003 DE 10328545
(43) Veröffentlichungstag der Anmeldung: 22.03.2006
(73) Patentinhaber: SIG Technology Ltd., 8212 Neuhausen am Rheinfall (CH)
(72) Erfinder: HEIL, Michael, 41179 Mönchengladbach (DE); VETTEN, Thomas, 40225 Düsseldorf (DE)
(74) Vertreter: Cohausz & Florack
(86) Internationale Anmeldenummer: PCT/EP2004/006839
(87) Internationale Veröffentlichungsnummer: WO 2005/005289

(56) Entgegenhaltungen:
- EP-A- 1 035 022
- DE-A- 10 154 203
- DE-U- 20 309 797
- US-A- 2 781 122
- US-A- 3 231 063
- US-B1- 6 176 369

## Beschreibung

Die vorliegende Erfindung betrifft eine Vorrichtung und ein Verfahren zum Zuführen und Bearbeiten von auf Trägerelementen angeordneten Packungen, insbesondere Getränkepackungen, mit einem kontinuierlich laufenden Transportband, wobei die Trägerelemente auf dem Transportband angeordnet sind, wobei in Laufrichtung des Transportbandes gesehen hinter den Vorzugswalzen zwei umlaufende Taktriemen vorgesehen sind, wobei die Taktriemen in einer Ebene parallel zur Ebene des Transportbandes umlaufen, wobei die Taktriemen jeweils ein dem anderen Taktriemen zugewandten Trum aufweisen und wobei die einander zugewandten Trümer parallel in einem Abstand zueinander verlaufen, der der Breite der Trägerelemente entspricht.

In Maschinen zum Befüllen von Einweg-Verbundpackungen werden vorgeformte Packungsrohlinge auf Trägerelemente gesetzt, die dann auf einem kontinuierlich laufenden Transportband von einer Bearbeitungsstation zur nächsten gefördert werden. Die Bearbeitungsstationen umfassen dabei weitere Form- und Siegelstationen sowie Füllstationen und Stationen zum endgültigen Verschließen der Packungen. Die Verwendung eines kontinuierlich laufenden Transportbandes, auf dem die Trägerelement-e mit den Packungen angeordnet sind und das zum Transport von einer Station zur nächsten verwendet wird, hat den Vorteil, dass keine komplizierte Regelung der Transportbänder erforderlich ist. Außerdem ist ein Umrüsten eines solchen Transportsystems auf eine andere Packungsform oder ein anderes Packungsformat dadurch leicht möglich, dass lediglich die Trägerelemente ausgetauscht werden.

Bei einem solchen Transportsystem werden gegebenenfalls chargenweise anfallende, mit Packungen versehene Trägerelemente zur jeweils nächsten Bearbeitungsstation weiter transportiert, wobei vor der nächsten Bearbeitungsstation möglicherweise ein Rückstau auftritt, wenn nicht gleich die gesamte Charge in einem Bearbeitungsschritt weiterverarbeitet wird. Dieser Rückstau führt jedoch nicht zu Problemen, da das kontinuierlich laufende Transportband unter den Trägerelementen weggleiten kann.

Eine Vorrichtung mit allen Merkmalen des Oberbegriffs von Anspruch 1 ist aus der US-A-2 781 122 bekannt.

Im Bereich der Bearbeitungsstationen entsteht jedoch bei einem derartigen Transportsystem dann ein technisches Problem, wenn die mit Packungen versehenen Trägerelemente einzeln bearbeitet werden müssen. In einem solchen Fall müssen die Trägerelemente einzeln kontrolliert der Bearbeitungsstation zugeführt werden und dabei genau in der Bearbeitungsstation positioniert werden. Hierbei ist es erwünscht, den vorrichtungsmäßigen Aufwand so gering wie möglich zu halten und die Trägerelemente im einfachsten Fall auf dem Transportband angeordnet zu belassen.

Daher liegt der vorliegenden Erfindung die Aufgabe zugrunde, eine Vorrichtung sowie ein Verfahren der eingangs genannten und zuvor näher beschriebenen Art so auszugestalten und weiterzubilden, dass zuverlässig und bei geringem technischen Aufwand kontinuierlich über ein Transportband zugeführte Trägerelemente in einer Bearbeitungsstation weiter verarbeitet werden können, wobei die Trägerelemente einzeln und ortsgenau positionierbar sein sollen.

Diese Aufgabe wird hinsichtlich der Vorrichtung gemäß dem Oberbegriff von Anspruch 1 dadurch gelöst, dass zwei Vorzugswalzen rechts und links des Transportbandes vorgesehen sind, deren Drehachsen senkrecht zur Ebene des Transportbandes stehen.

Durch eine gesteuerte Bewegung der Vorzugswalzen können die Trägerelemente einzeln in eine Einzugsposition überführt werden. Aus der Einzugsposition wird das Trägerelement dann von den seitlich des Transportbandes angeordneten Taktriemen übernommen, sobald die Taktriemen in Bewegung versetzt worden sind, und anschließend in der Bearbeitungsstation positioniert.

Wenn die Trägerelemente die gewünschte Position in der Bearbeitungsstation erreicht haben, wird die Bewegung der Taktriemen gestoppt und die Bearbeitung kann erfolgen. Dabei erlaubt eine gesteuerte Bewegung der Taktriemen eine genaue Positionierung der Trägerelemente.

Da die Trägerelemente ständig im Eingriff mit den Taktriemen stehen, können die Trägerelemente auf dem Transportband verbleiben, wobei das Transportband unter dem Trägerelement weggleitet. Ein Anheben der Trägerelemente ist somit nicht erforderlich.

Die Genauigkeit der Positionierung wird weiter erhöht, weil die relative Position zwischen Taktriemen und Trägerelementen festgelegt ist. Dies ist dadurch erreicht worden, dass die Taktriemen auf den einander zugewandten Seiten eine Verzahnung aufweisen, und dass die Trägerelemente an den Seitenwänden ebenfalls mit einer Verzahnung versehen sind.

Nach einer weiteren Lehre der Erfindung sind die Taktriemen als Zahnriemen ausgebildet, die jeweils von zwei Zahnriemenscheiben geführt sind. Damit wird der Schlupf zwischen den angetriebenen Zahnriemenscheiben und den Taktriemen minimiert, was die Genauigkeit der Positionierung der Trägerelemente weiter erhöht.

Eine weitere Ausgestaltung der Erfindung sieht vor, dass ein Sensor zum Erfassen einer Einzugsposition der Trägerelemente vorgesehen ist, so dass die Taktriemen erst dann in Bewegung versetzt werden, wenn ein Trägerelement auch wirklich die Einzugsposition erreicht hat.

Um die Aufnahme der Trägerelemente durch die Taktriemen und die Übergabe an das Transportband zu erleichtern, ist es besonders vorteilhaft, wenn die in Transportrichtung gesehen vorderen und hinteren Zähne der Trägerelemente einen im Vergleich zu den mittleren Zähnen vergrößerten Abstand aufweisen.

Damit die Geschwindigkeit der Trägerelemente kurz vor Erreichen der Einzugsposition reduziert werden kann, um einen abrupten Stopp zu vermeiden, ist es bevorzugt, dass ein zweiter Sensor zum Erfassen einer Bremsposition vorgesehen ist.

Vorzugsweise sind in Transportrichtung der Trägerelemente gesehen vor den Vorzugswalzen Einzugswalzen vorgesehen, deren Achsen senkrecht zur Ebene des Transportbandes angeordnet sind. Diese verhindern, dass nachfolgende Trägerelemente bei Bewegung der Vorzugswalzen dem vorher eingezogenen Trägerelement folgen. Beim Erreichen der Einzugsposition durch ein eingezogenes Trägerelement kommt es zu keinem "Staudruck" durch nachfolgende Trägerelemente.

Bevorzugt erfolgt die Bewegung der Trägerelemente auf dem Weg in die Einzugsposition ständig kontrolliert, wobei der Abstand der Einzugswalzen von den Vorzugswalzen kleiner als die Seitenlänge der Trägerelemente ist. In diesem Fall stehen die Trägerelemente ständig entweder mit den Einzugswalzen oder den Vorzugswalzen in Eingriff. Dabei ist es weiterhin bevorzugt, wenn der Abstand der Einzugswalzen von den Vorzugswalzen zwischen 1 mm und 10 mm, vorzugsweise 2 mm bis 5 mm, kürzer als die Seitenlänge der Trägerelemente ist.

Verfahrensmäßig wird die Aufgabe durch die folgenden Schritte gelöst:
- Einziehen eines Trägerelements aus einer Warteposition in eine Einzugsposition,
- Transport des Trägerelements aus der Einzugsposition in eine Bearbeitungsposition durch Bewegung seitlich des Trägerelements angeordneter umlaufender Taktriemen.
- Bearbeitung der Packung auf dem Trägerelement in einer Bearbeitungsposition bei stehenden Taktriemen,
- Weitertransport des Trägerelements mittels der Taktriemen und
- Übergabe an das kontinuierlich laufende Transportband.

Bezüglich der Vorteile des erfindungsgemäßen Verfahrens wird auf die bereits zu den Vorrichtungsmerkmalen genannten Vorteile verwiesen.

Die vorliegende Erfindung wird nachfolgend anhand einer lediglich ein bevorzugtes Ausführungsbeispiel darstellenden Zeichnung näher erläutert. In der Zeichnung zeigen
- Fig. 1: eine erfindungsgemäße Vorrichtung in Draufsicht,
- Fig. 2: den in Fig. 1 mit II gekennzeichneten Ausschnitt in Vergrößerung und
- Fig. 3: den in Fig. 1 mit III gekennzeichneten Ausschnitt in Vergrößerung.

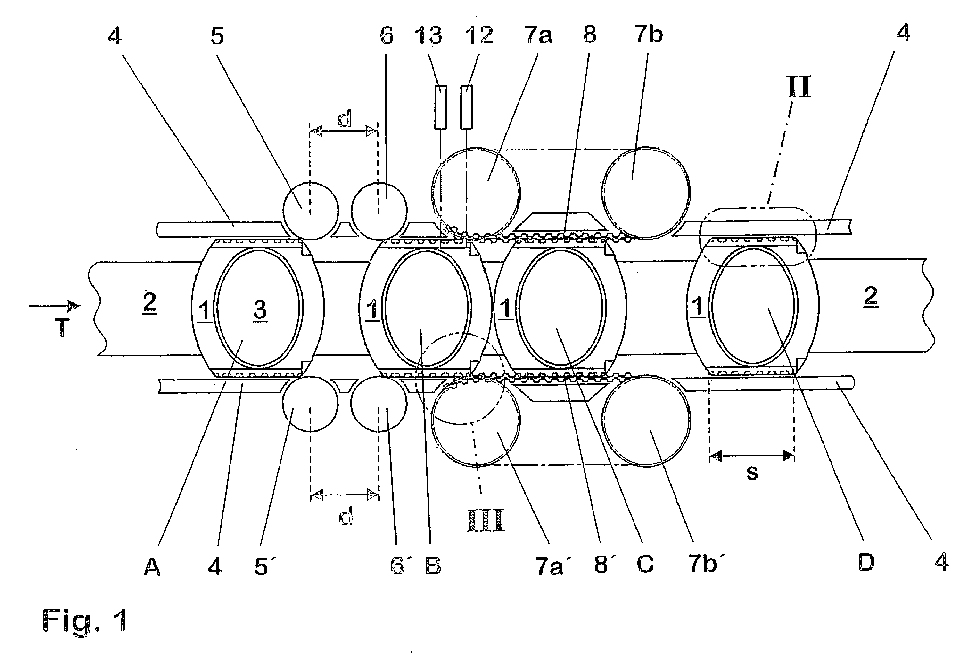

Fig. 1 zeigt eine Vorrichtung zum Zuführen und Bearbeiten von auf Trägerelementen 1 angeordneten Packungen, wobei es sich bei diesen bevorzugt um nicht dargestellte Packungsrohlinge für Getränkepackungen handelt. Die erfindungsgemäße Vorrichtung weist ein Transportband 2 auf, das sich mit konstanter Geschwindigkeit kontinuierlich in eine Transportrichtung T bewegt. Auf dem Transportband 2 sind die Trägerelemente 1 stehend angeordnet, wobei die Trägerelemente 1 in der Mitte eine Aufnahme 3 aufweisen. In die Aufnahme 3 können die nicht dargestellten Packungsrohlinge zur weiteren Bearbeitung eingesetzt werden.

Rechts und links des Transportbandes 2 sind Führungen 4 vorgesehen, die die seitliche Führung der Trägerelemente 1 während des Transports durch das Transportband 2 übernehmen. Dabei stehen die Trägerelemente 1 lediglich auf dem Transportband 2 und die Oberfläche des Transportbandes 2 und die Unterseite der Trägerelemente 1 weisen eine reibungsarme Oberfläche auf, so dass das Transportband 2 unter den Trägerelementen 1 weggleiten kann, wenn Letztere festgehalten werden.

Die erfindungsgemäße Vorrichtung weist außerdem rechts und links des Transportbandes 2 angeordnete Einzugswalzen 5, 5' auf, wobei sich die Einzugswalzen 5, 5' senkrecht zum Transportband 2 erstrecken. Der Abstand der Einzugswalzen 5, 5' voneinander entspricht der Breite der Trägerelemente 1.

In Transportrichtung T der Trägerelemente 1 gesehen hinter den Einzugswalzen 5, 5' sind im Abstand d weitere Walzen, und zwar Vorzugswalzen 6, 6' angeordnet, deren Drehachsen ebenfalls senkrecht zum Transportband 2 verlaufen. Auch die Vorzugswalzen 6, 6' weisen einen Abstand zueinander auf, der der Breite der Trägerelemente 1 entspricht. Der Abstand d der Vorzugswalzen 6, 6' von den Einzugswalzen 5, 5' ist dabei kleiner als die Seitenlänge s der Trägerelemente 1.

In Transportrichtung T der Trägerelemente 1 gesehen hinter den Vorzugswalzen 6, 6' und seitlich zu dem Transportband 2 sind Zahnriemenscheibenpaare 7a, 7b und 7a', 7b' vorgesehen, um die jeweils ein Taktriemen 8, 8' umläuft und von denen die Scheiben 7b und 7b' angetrieben sind. Die Taktriemen 8, 8' weisen innen und außen eine Verzahnung auf und laufen in einer Ebene, die parallel zur Ebene des Transportbandes 2 verläuft. Außerdem weisen die Taktriemen 8, 8' jeweils ein dem anderen Taktriemen zugewandeten Trum auf, und die einander zugewandten Trümer verlaufen parallel zueinander und in einem Abstand, der der Breite der Trägerelemente 1 entspricht.

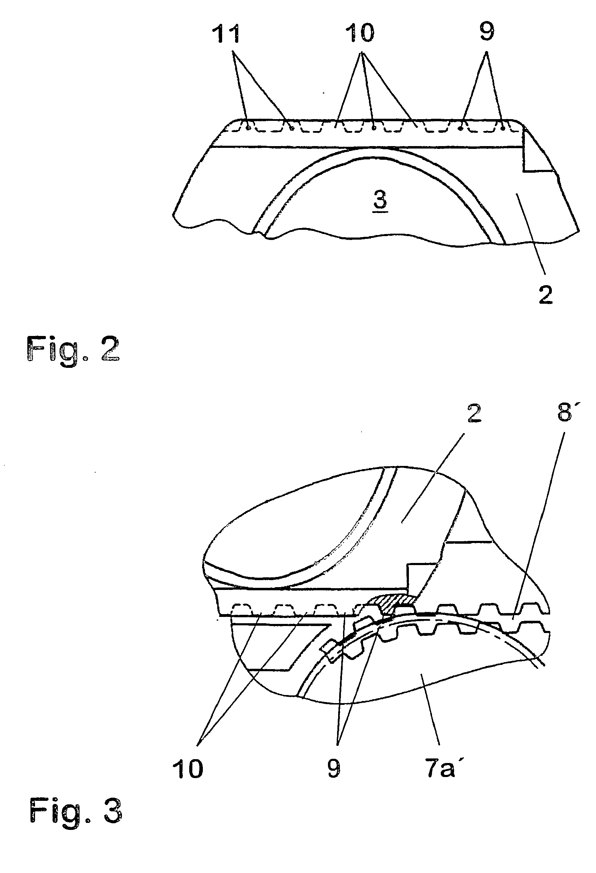

Die Trägerelemente 1 weisen auf ihren beiden Außenseiten eine Verzahnung auf, so dass die Trägerelemente 1, wenn sie sich zwischen den Taktriemen 8, 8' befinden, mit diesen in Eingriff stehen. Wie Fig. 2 zu entnehmen ist, ist die Verzahnung 9, 10, 11 an den Trägerelementen 1 derart ausgebildet, dass die vorderen Zähne 9 und die hinteren Zähne 11 einen größeren Abstand zueinander aufweisen als die mittleren Zähne 10. Aus Fig. 1 geht ferner hervor, dass zwischen den Vorzugswalzen 6, 6' und den Zahnriemenscheibenpaaren 7a, 7b, 7a', 7b' ein Sensor 12 zum Erfassen der Einzugsposition B angeordnet ist.

Wie Fig. 3 zu entnehmen ist, ist die Einzugsposition B der Trägerelemente 1 derart angeordnet, dass nur die in Transportrichtung T gesehen beiden vorderen Zähne 9 in Eingriff mit den Zähnen der Taktriemen 8, 8' stehen.

Zwischen den Vorzugswalzen 6, 6' ist außerdem noch ein zweiter Sensor 13 vorgesehen, durch den während des Transportes der Trägerelemente 1 durch die Vorzugswalzen 6, 6' und gegebenenfalls die Einzugswalzen 5, 5' eine Bremsposition erfasst wird, eine Position, nach deren Erreichen die Geschwindigkeit der Trägerelemente 1 verringert bzw. gestoppt werden kann.

Soll ein in der Aufnahme 3 eines Trägerelements 1 angeordneter Verpackungsrohling bearbeitet werden, wobei sich das Trägerelement 1 mit dem nicht dargestellten Verpackungsrohling in der Warteposition A befindet, läuft das folgende Verfahren ab: Zunächst werden die Einzugswalzen 5, 5' und die Vorzugswalzen 6, 6' in Bewegung versetzt, so dass ein Trägerelement 1 aus der Warteposition A in die Einzugsposition B transportiert wird. Dadurch, dass der Abstand d zwischen den Einzugswalzen 5, 5' und den Vorzugswalzen 6, 6' kleiner als die Seitenlänge s der Trägerelemente 1 ist, werden die Trägerelemente 1 ständig von einem der beiden Walzenpaare geführt, wodurch die Bewegung der Trägerelemente 1 in dieser Phase ständig kontrolliert erfolgt.

Wenn ein Trägerelement 1 nicht mehr in Eingriff mit den Einzugswalzen 5, 5' steht, wird deren Antrieb gestoppt, so dass nachfolgende Trägerelemente 1 vor den Einzugswalzen 5, 5' verbleiben müssen. Somit kommt es zu keinem "Staudruck" durch nachfolgende Trägerelemente 1.

Der Antrieb der Vorzugswalzen 6, 6' wird in dem Moment verlangsamt, wenn der Sensor 13 meldet, dass das Trägerelement 1 die Bremsposition erreicht hat. Meldet der Sensor 12, dass die Einzugsposition B erreicht ist, werden die Vorzugswalzen 6, 6' gestoppt.

Wie in Fig. 3 dargestellt, liegen nunmehr die beiden vorderen der Zähne 9 der an den Trägerelementen 1 ausgebildeten Verzahnung an den Zähnen der Taktriemen 8, 8' an. Dadurch, dass die vorderen Zähne 9 an den Trägerelementen 1 einen größeren Abstand voneinander aufweisen als die mittleren Zähne 10, wird die Übernahme durch die Taktriemen 8, 8' erleichtert. Die genaue Positionierung der Trägerelemente 1 relativ zu den Taktriemen 8, 8' erfolgt erst durch die mittleren Zähne 10.

Beim Erreichen der Einzugsposition B wird ds Signal des Sensors 12, welcher die Vorzugswalzen 6, 6' stoppt, auch dazu verwendet, um die Zahnriemenscheibenpaare 7a, 7b und 7a', 7b' in Drehung zu versetzen. Dadurch wird das Trägerelement 1 mittels der Taktriemen 8, 8' aus der Einzugsposition B in Transportrichtung T weiterbefördert, bis er die Bearbeitungsposition C erreicht hat. Hier wird die Bewegung der Zahnriemenscheibenpaare 7a, 7b; 7a', 7b' gestoppt und es erfolgt die Bearbeitung des im Trägerelement 1 befindlichen (nicht dargestellten) Packungsrohlings. Hierbei kann der Packungsrohling weiter geformt, befüllt, mit einem Ausgießelement versehen oder verschlossen werden.

Durch die Verwendung von innen und außen verzahnten Zahnriemen und der Verzahnung der Trägerelemente 1 ist eine ortsgenaue Positionierung sichergestellt.

Nach Beendigung des Bearbeitungsvorganges werden die Zahnriemenscheibenpaare 7a, 7b; 7a', 7b' wieder in Bewegung versetzt und das Trägerelement 1 wird weiter in Transportrichtung T befördert, bis er nicht mehr mit dem Taktriemen 8, 8' in Eingriff steht. Von nun an wird das Trägerelement 1 von dem kontinuierlich laufenden Transportband 2 weiter befördert und erreicht die Position D. Dabei erfolgt der Übergang der Trägerelemente 1 von den Taktriemen 8, 8' auf das Transportband 2 ohne große Erschütterungen, da die hinteren Zähne 11 der Trägerelemente 1 einen vergrößerten Abstand voneinander aufweisen.

Während des gesamten zuvor beschriebenen Vorganges stehen die Trägerelemente 1 auf dem sich kontinuierlich bewegenden Transportband 2. Da die Trägerelemente 1 jedoch entweder in Eingriff mit den Einzugswalzen 5, 5', den Vorzugswalzen 6, 6' oder den Taktriemen 8, 8' stehen, wird die Bewegung des Trägerelements 1 nicht durch die Bewegung des Transportbandes 2 beeinflusst. Das Transportband 2 gleitet lediglich unter dem Boden des Trägerelements 1 weiter. Ein Anheben des Trägerelements 1 kann somit unterbleiben, wobei dennoch eine ortsgenaue Positionierung des Trägerelements 1 in der Bearbeitungsstation ermöglicht wird.

## Patentansprüche

1. Vorrichtung zum Zuführen und Bearbeiten von auf Trägerelementen angeordneten Packungen, insbesondere Getränkepackungen, mit einem kontinuierlich laufenden Transportband, wobei die Trägerelemente auf dem Transportband angeordnet sind, wobei in Laufrichtung (T) des Transportbandes (2) gesehen hinter den Vorzugswalzen (6, 6') zwei umlaufende Taktriemen (8, 8') vorgesehen sind, wobei die Taktriemen (8, 8'.) in einer Ebene parallel zur Ebene des Transportbandes (2) umlaufen, wobei die Taktriemen (8, 8') jeweils ein dem anderen Taktriemen (8, 8') zugewandten Trum aufweisen und wobei die einander zugewandten Trümer parallel in einem Abstand zueinander verlaufen, der der Breite der Trägerelemente (1) entspricht,
**dadurch gekennzeichnet, dass**
zwei Vorzugswalzen (6, 6') rechts und links des Transportbandes (2) vorgesehen sind, deren Drehachsen senkrecht zur Ebene des Transportbandes (2) stehen, dass die Taktriemen (8, 8') auf den einander zugewandten Seiten eine Verzahnung aufweisen und dass die Trägerelemente (1) an ihren beiden Außenseiten mit einer Verzahnung versehen sind.

2. Vorrichtung nach Anspruch 1,
**dadurch gekennzeichnet, dass**
die Taktriemen (8, 8') als Zahnriemen ausgebildet sind, die jeweils von zwei Zahnriemenscheiben (7a, 7b bzw. 7a', 7b') geführt sind.

3. Vorrichtung nach Anspruch 1 oder 2,
**dadurch gekennzeichnet, dass**
ein Sensor (12) zum Erfassen einer Einzugsposition (B) der Trägerelemente (1) vorgesehen ist.

4. Vorrichtung nach Anspruch 1,
**dadurch gekennzeichnet, dass**
die in Transportrichtung (T) gesehen vorderen Zähne (9) und hinteren Zähne (11) der Trägerelemente (1) einen im Vergleich zu den mittleren Zähnen (10) vergrößerten Abstand aufweisen.

5. Vorrichtung nach Anspruch 1 oder 4,
**dadurch gekennzeichnet, dass**
die Einzugsposition (A) der Trägerelemente (1) derart angeordnet ist, dass nur die in Transportrichtung (T) gesehen beiden vorderen Zähne (9) der Trägerelemente (1) mit den Taktriemen (8, 8') in Eingriff stehen.

6. Vorrichtung nach einem der Ansprüche 1 bis 5,
**dadurch gekennzeichnet, dass**
ein zweiter Sensor (13) zum Erfassen einer Bremsposition vorgesehen ist.

7. Vorrichtung nach Anspruch 1 bis 6,
**dadurch gekennzeichnet, dass**
in Transportrichtung (T) der Trägerelemente (1) gesehen vor den Vorzugswalzen (6, 6') Einzugswalzen (5, 5') vorgesehen sind, deren Drehachsen senkrecht zur Ebene des Transportbandes (2) angeordnet sind.

8. Vorrichtung nach Anspruch 7,
**dadurch gekennzeichnet, dass**
der Abstand (d) der Einzugswalzen (5, 5') von den Vorzugswalzen (6, 6') kleiner als die Seitenlänge (s) der Trägerelemente (1) ist.

9. Verfahren zum Zuführen und Bearbeiten von Packungen, insbesondere Getränkepackungen, die auf Trägerelementen (1) angeordnet sind, die stehend auf einem kontinuierlich laufenden Transportband (2) angeordnet sind, umfassend die folgenden Schritte:
- Einziehen eines Trägerelements (1) aus einer warteposition (A) in eine Einzugsposition (B),
- Transport des Trägerelements (1) aus der Einzugsposition (B) in eine Bearbeitungsposition (C) durch Bewegung seitlich des Trägerelements (1) angeordneter umlaufender Taktriemen (8, 8').
- Bearbeitung der Packung auf dem Trägerelement (1) in der Bearbeitungsposition (C) bei stehenden Taktriemen (8, 8'),
- Weitertransport des Trägerelements (1) mittels der Taktriemen (8, 8') und
- Übergabe an das kontinuierlich laufende Transportband (2).

10. Verfahren nach Anspruch 9,
**dadurch gekennzeichnet, dass**
beim Einziehen des Trägerelements (1) das Erreichen der Einzugsposition (B) überwacht wird.

11. Verfahren nach Anspruch 10,
**dadurch gekennzeichnet, dass**
die Bewegung der Taktriemen (8, 8') zum Transport erst nach Erreichen der Einzugsposition (B) des Trägerelements (1) gestartet wird.

12. Verfahren nach einem der Ansprüche 9 bis 11,
**dadurch gekennzeichnet, dass**
die Geschwindigkeit des Trägerelements (1) beim Einziehen vor Erreichen der Einzugsposition (B) reduziert wird.

13. Verfahren nach Anspruch 12,
**dadurch gekennzeichnet, dass**
beim Einziehen des Trägerelements (1) das Erreichen einer Bremsposition überwacht wird und nach Erreichen der Bremsposition die Geschwindigkeit des Trägerelements (1) reduziert wird.

14. Verfahren nach einem der Ansprüche 9 bis 13,
**dadurch gekennzeichnet, dass**
das Trägerelement (1) beim Einziehen von Einzugswalzen (5, 5') befördert und anschließend von Vorzugswalzen (6, 6') in die Einzugsposition (B) gebracht wird.

15. Verfahren nach Anspruch 14,
**dadurch gekennzeichnet, dass**
das Trägerelement (1) bei Erreichen der Einzugsposition (B) nur mit den Vorzugswalzen (6, 6') in Eingriff steht.

16. Verfahren nach einem der Ansprüche 9 bis 15,
**dadurch gekennzeichnet, dass**
in der Bearbeitungsposition (C) auf die Trägerelemente (1) Verbundpackungsrohlinge eingesetzt werden.

17. Verfahren nach einem der Ansprüche 9 bis 15,
**dadurch gekennzeichnet, dass**
in der Bearbeitungsposition (C) auf den Trägerelementen (1) angeordnete Packungsrohlinge zu fertigen Packungen geformt werden.

18. Verfahren nach einem der Ansprüche 9 bis 15,
**dadurch gekennzeichnet, dass**
in der Bearbeitungsposition (C) auf den Trägerelementen (1) angeordnete Packungen befüllt werden.

19. Verfahren nach einem der Ansprüche 9 bis 15,
**dadurch gekennzeichnet, dass**
in der Bearbeitungsposition (C) bei auf den Trägerelementen (1) angeordneten Packungen Ausgießelemente aufgesiegelt werden.

20. Verfahren nach einem der Ansprüche 9 bis 15,
**dadurch gekennzeichnet, dass**
in der Bearbeitungsposition (C) bei auf den Trägerelementen (1) angeordneten Packungen Ausgießöffnungen versiegelt werden.

## Claims

1. A device for supplying and processing packages arranged on support elements, especially beverage packs, with a continuously running conveyor belt, wherein the support elements are arranged on the conveyor belt, wherein two revolving cycle belts (8, 8') are provided after the drawing rollers (6, 6') seen in the running direction (T) of the conveyor belt (2), wherein the cycle belts (8, 8') revolve in a plane parallel to the plane of the conveyor belt (2), wherein the cycle belts (8, 8') each have a side facing the other cycle belt (8, 8') and the sides facing one another run parallel to one another at a distance which corresponds to the width of the support elements (1), **characterised in that** two drawing rollers (6, 6') are provided on the right and left of the conveyor belt (2), whose axes of rotation are perpendicular to the plane of the conveyor belt (2), the cycle belts (8, 8') have a toothed structure on the sides facing one another and that the support elements (1) are provided with a toothed structure on their two outer sides.

2. The device according to claim 1,
**characterised in that** the cycle belts (8, 8') are constructed as toothed belts which are each guided by two toothed-belt disks (7a, 7b or 7a', 7b').

3. The device according to claim 1 or 2,
**characterised in that** a sensor (12) is provided to detect a draw-in position (B) of the support elements (1).

4. The device according to claim 1,
**characterised in that** the front teeth (9) and rear teeth (11) of the support elements (1) seen in the transport direction (T) have an enlarged spacing compared with the middle teeth (10).

5. The device according to claim 1 or 4,
**characterised in that** the draw-in position (A) of the support elements (1) is arranged such that only the two front teeth (9) of the support elements (1) seen in the transport direction (T) engage with the cycle belts (8, 8').

6. The device according to any one of claims 1 to 5,
**characterised in that** a second sensor (13) is provided to detect a braking position.

7. The device according to claims 1 to 6,
**characterised in that** draw-in rollers (5, 5') are provided before the drawing rollers (6, 6') seen in the transport direction (T) of the support elements (1), whose axes of rotation are arranged perpendicular to the plane of the conveyor belt (2).

8. The device according to claim 7,
**characterised in that** the distance (d) of the draw-in rollers (5, 5') from the drawing rollers (6, 6') is shorter than the side length (s) of the support elements (1).

9. A method for supplying and processes packages, especially beverage packs, arranged on support elements (1) which are arranged vertically on a continuously running conveyor belt (2), comprising the following steps:
- drawing in a support element (1) from a waiting position (A) into a draw-in position (B),
- transporting the support element (1) from the draw-in position (B) into a processing position (C) by movement of the revolving cycle belts (8, 8') arranged at the side of the support element (1),
- processing the pack on the support element (1) in the processing position (C) with the cycle belts (8, 8') stationary,
- further transport of the support element (1) by means of the cycle belts (8, 8') and
- transfer to the continuously running conveyor belt (2).

10. The method according to claim 9,
**characterised in** the that the attainment of the draw-in position (B) is monitored during drawing in of the support element (1).

11. The method according to claim 10,
**characterised in that** the movement of the cycle belt (8, 8') for transport is only started after reaching the draw-in position (B) of the support element (1).

12. The method according to any one of claims 9 to 11,
**characterised in that** the speed of the support element (1) during drawing in is reduced before reaching the draw-in position (B).

13. The method according to claim 12,
**characterised in that** during drawing in of the support element (1) the attainment of a braking position is monitored and after reaching the braking position the speed of the support element (1) is reduced.

14. The method according to any one of claims 9 to 13,
**characterised in that** the support element (1) is conveyed during drawing in of the draw-in rollers (5, 5') and is then brought into the draw-in position (B) by the drawing rollers (6, 6').

15. The method according to claim 14,
**characterised in that** on reaching the draw-in position (B), the support element (1) is only in engagement with drawing rollers (6, 6').

16. The method according to any one of claims 9 to 15,
**characterised in that** in the processing position (C) composite packaging blanks are placed on the support elements (1).

17. The method according to any one of claims 9 to 15,
**characterised in that** in the processing position (C) packaging blanks arranged on the support elements (1) are formed into finished packs.

18. The method according to any one of claims 9 to 15,
**characterised in that** in the processing position (C) packs arranged on the support elements (1) are filled.

19. The method according to any one of claims 9 to 15,
**characterised in that** in the processing position (C) pouring elements are sealed onto the packs arranged on the support elements (1).

20. The method according to any one of claims 9 to 15,
**characterised in that** in the processing position (C) pouring openings are sealed on the packs arranged on the support elements (1).

## Revendications

1. Dispositif d'amenée et de traitement d'emballages disposés sur des éléments supports, en particulier des emballages pour boissons, avec une bande de transport défilant en continu, les éléments supports étant disposés sur la bande de transport, deux courroies de cadencement (8, 8') mises en circulation étant prévues, derrière les rouleaux d'avancement (6, 6') en observant dans la direction de défilement (T) de la bande de transport (2), les courroies de cadencement (8, 8') circulant dans un plan parallèle au plan de la bande de transport (2), sachant que les courroies de cadencement (8, 8') présentent chacune un brin tourné vers l'autre courroie de cadencement (8, 8') et les brins tournés l'un vers l'autre s'étendant parallèlement et à une distance qui correspond à la largeur des éléments supports (1),
**caractérisé en ce que**
deux rouleaux d'avancement (6, 6') sont prévus, à droite et à gauche de la bande de transport (2), dont les axes de rotation sont perpendiculaires au plan de la bande de transport (2), **en ce que** les courroies de cadencement (8, 8') présentent, sur les faces tournées l'une vers l'autre, une denture, et **en ce que** les éléments de transport (1) sont munis d'une denture sur leurs deux faces extérieures.

2. Dispositif selon la revendication 1, **caractérisé en ce que** les courroies de cadencement (8, 8') sont réalisées sous la forme de courroies dentées, guidées chacune par deux poulies pour courroies dentées (7a, 7b, respectivement 7a', 7b').

3. Dispositif selon la revendication 1 ou 2, **caractérisé en ce qu'**un capteur (12) est prévu, pour déterminer une position d'introduction (B) des éléments supports (1).

4. Dispositif selon la revendication 1, **caractérisé en ce que** les dents avant (9) et les dents arrière (11), en observant dans la direction de transport (T) des éléments supports (1), présentent un espacement agrandi par rapport à celui des dents médianes (10).

5. Dispositif selon la revendication 1 ou 4, **caractérisé en ce que** la position d'introduction (A) des éléments supports (1) est disposée de manière que seule les deux dents avant (9), en observant dans la direction de transport (T) des éléments supports (1), s'engrènent avec les courroies de cadencement (8, 8').

6. Dispositif selon l'une des revendications 1 à 5, **caractérisé en ce qu'**un deuxième capteur (13) est prévu, pour déterminer une position de freinage.

7. Dispositif selon les revendications 1 à 6, **caractérisé en ce que**, à l'avant des rouleaux d'avancement (6, 6'), en observant dans la direction de transport (T) des éléments supports (1), sont prévus des rouleaux d'introduction (5, 5'), dont les axes de rotation sont disposés perpendiculairement au plan de la bande de transport (2).

8. Dispositif selon la revendication 7, **caractérisé en ce que** l'espacement (d) des rouleaux d'introduction (5, 5') vis-à-vis des rouleaux d'avancement (6, 6') est inférieur à la longueur de corde (s) des éléments supports (1).

9. Procédé d'amenée et de traitement d'emballages, en particulier d'emballages pour boissons, disposés sur des éléments supports (1), placés verticalement sur une bande de transport (2) défilant en continu, comprenant les étapes suivantes :
- introduction d'un élément support (1) d'une position d'attente (A) à une position d'introduction (B),
- transport de l'élément support (1) de la position d'introduction (B) à une position de traitement (C), par déplacement de courroies de cadencement (8, 8') mises en circulation, disposées sur le côté de l'élément support (1),
- traitement de l'emballage placé sur l'élément support (1) à la position de traitement (C), lorsque les courroies de cadencement (8, 8') sont stationnaires,
- retransport de l'élément support (1) au moyen de la courroie de cadencement (8, 8'), et
- transfert à la bande de transport (2) défilant en continu.

10. Procédé selon la revendication 9, **caractérisé en ce que**, lors de l'introduction de l'élément support (1), on surveille l'atteinte de la position d'introduction (B).

11. Procédé selon la revendication 10, **caractérisé en ce que** le déplacement des courroies de cadencement (8, 8') pour le transport est lancé ultérieurement, après atteinte de la position d'introduction (B) de l'élément support (1).

12. Procédé selon l'une des revendications 9 à 11, **caractérisé en ce que** la vitesse de l'élément support (1) lors de l'introduction est réduite avant d'atteindre la position d'introduction (B).

13. Procédé selon la revendication 12, **caractérisé en ce que**, lors de l'introduction de l'élément support (1), l'atteinte d'une position de freinage est surveillée et, après atteinte de la position de freinage, la vitesse de l'élément support (1) est réduite.

14. Procédé selon l'une des revendications 9 à 13, **caractérisé en ce que** l'élément support (1) est transporté lors de l'introduction de rouleaux d'introduction (5, 5') et est placé ensuite à la position d'introduction (B), par des rouleaux d'avancement (6, 6').

15. Procédé selon la revendication 14, **caractérisé en ce que** l'élément support (1) ne s'engrène avec les rouleaux d'avancement (6, 6') qu'à l'atteinte de la position d'introduction (B).

16. Procédé selon l'une des revendications 9 à 15, **caractérisé en ce que**, à la position de traitement (C), des ébauches d'emballages composites sont insérées sur les éléments supports (1).

17. Procédé selon l'une des revendications 9 à 15, **caractérisé en ce que**, à la position de traitement (C), des ébauches d'emballages, disposées sur les éléments supports (1), sont formées pour produire des emballages achevés.

18. Procédé selon l'une des revendications 9 à 15, **caractérisé en ce que**, pendant le séjour à la position de traitement (C), on procède au remplissage des emballages disposés sur les éléments supports (1).

19. Procédé selon l'une des revendications 9 à 15, **caractérisé en ce que**, à la position de traitement (C), lorsque les emballages sont disposés sur les éléments supports (1), on procède à l'adjonction par scellage d'éléments de versement.

20. Procédé selon l'une des revendications 9 à 15, **caractérisé en ce que**, pendant que l'on se trouve à la position de traitement (C), des ouvertures de versement, des emballages disposés sur les éléments supports (1), sont scellées.
